# EUROPEAN PATENT SPECIFICATION

(11) **EP 3 364 176 B1**
(45) Date of publication and mention of the grant of the patent: **19.05.2021**
(21) Application number: 18156264.6
(22) Date of filing: 12.02.2018
(51) Int. Cl.: G01N 23/203, G01V 5/00, G01N 23/04

(54) **MULTI-VIEW BACKSCATTER INSPECTION SYSTEM AND MULTI-VIEW BACKSCATTER INSPECTION METHOD**
RÜCKSTREUUNGSINSPEKTIONSSYSTEM UND RÜCKSTREUUNGSINSPEKTIONSVERFAHREN MIT MEHREREN ANSICHTEN
SYSTÈME D'INSPECTION DE RÉTRODIFFUSION MULTIVUE ET PROCÉDÉ D'INSPECTION DE RÉTRODIFFUSION MULTIVUE

(30) Priority: 17.02.2017 CN 201710084834
(43) Date of publication of application: 22.08.2018
(73) Proprietor: Tsinghua University, Haidian District, Beijing 100084 (CN); Nuctech Company Limited, TongFang Building, Shuangqinglu, Haidian District Beijing 100084 (CN)
(72) Inventor: YU, Hao, Beijing 100084 (CN); LI, Jianmin, Beijing 100084 (CN); ZONG, Chunguang, Beijing 100084 (CN); Li, Yulan, Beijing 100084 (CN); LIU, Lei, Beijing 100084 (CN); Li, Yuanjing, Beijing 100084 (CN); CHI, Haojie, Beijing 100084 (CN); CHEN, Zhiqiang, Beijing 100084 (CN); ZHANG, Li, Beijing 100084 (CN)
(74) Representative: Held, Stephan

(56) References cited:
- EP-A1- 2 963 455
- WO-A2-2005/098400
- US-A- 6 094 472
- US-A1- 2016 025 890

## Description

### RELATED APPLICATION

The present application claims priority from Chinese application number CN201710084834.9 filed Feb. 17,2017.

### FIELD OF THE INVENTION

The present application relates to the field of backscatter imaging technology, and in particular relates to a multi-view backscatter inspection system and a multi-view backscatter inspection method.

### BACKGROUND OF THE INVENTION

X-ray backscatter imaging technology is a technique that uses X-ray pencil beam to irradiate an object, and performs imaging by detecting a backscatter radiation of the object. X-ray backscatter imaging technology, which has such advantages as low radiation dose, sensitivity to light materials and visual images, is widely applied in safety inspection fields of human body, cargo and vehicle, and suitable for inspecting concealed drugs and explosives. X-ray for backscatter imaging with a very low penetration, can only perform shallow imaging of a surface of the inspection target.

The multi-view backscatter inspection system may perform imaging of a plurality of surfaces of an inspection target, so that more information of the detection target may be obtained.

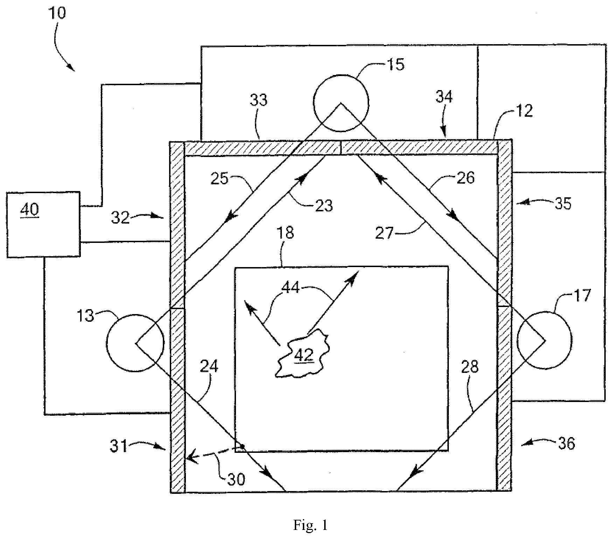

The Chinese Patent Application No. CN1947001A of AMERICAN SCIENCE & ENG INC., the invention title of which is "Eliminating cross-talk in a backscatter inspection portal comprising multiples sources by ensuring that only one source is emitting radiation at a time" has disclosed an inspection system and an inspection method using a plurality of penetrating radiation sources to inspect an object. As shown in FIG. 1, the inspection system described in the Chinese patent application has a plurality of rotary pencil beam radiation sources for producing a plurality of beam scanning surfaces, and the plurality of beam scanning surfaces are substantially coplanar. The invention proposes to make each radiation source emit a beam only for a period of time in its operation cycle, and achieve the effect that there is only one radiation source emitting a beam at any moment by staggering the beam emitting time of different radiation sources, so as to eliminate mutual interference of a plurality of beam scanning surfaces. The various reference signs in Figure 1 respectively represent: 10-inspection system, 12-transverse inlet, 13, 15, 17-source, 18-inspection target, 23, 24, 25, 26, 27, 28-beam, 30-X-ray, 31, 32, 33, 34, 35, 36-detector, 40-processor, 42-internal characteristics of inspection target, 44-scatter radiation.

In the process of implementing the present application, the inventors finds that the technical solution disclosed in the above Chinese patent application has the following shortcomings:

The beam emission of each radiation source at different time, albeit solving the problem of mutual interference of multiple views, causes a reduction in an average dose rate of an output radiation from the radiation source of each view. In the case of a fixed power of each radiation source, the greater the proportion occupied by the beam emission time in the operation cycle, the larger the average dose rate of the output radiation will be and the better the image quality will be. In the inspection system shown in Figure 1, the beam emission time of each radiation source at most occupies 1/3 of the operation cycle, that is, the average dose rate of the output radiation is 1/3 of the single view so that the image quality will be far worse than the single-view system.

The US Application No. US2016/0025890A1 discloses a multi-view X-ray inspection system having, in one of several embodiments, a three-view configuration with three X-ray sources. Each X-ray source rotates and is configured to emit a rotating X-ray pencil beam and at least two detector arrays, where each detector array has multiple non-pixellated detectors such that at least a portion of the non-pixellated detectors are oriented toward both the two X-ray sources.

### SUMMARY OF THE INVENTION

The present application provides a multi-view backscatter inspection system and method which aim at effectively reducing the mutual interference between each other during simultaneous beam emission of multiple views, and improving the quality of an inspection image.

The first aspect of the present application provides a multi-view backscatter inspection system, comprising an inspection passage, at least two inspection units, a control device and a data processing device; wherein,
each of the inspection units comprises a radiation source for producing a rotating pencil radiation beam, and a detector array for receiving a backscatter radiation from a detection target irradiated by the radiation beam, the detector array comprising at least two detector modules arranged at different positions and independent of each other;
the at least two inspection units are disposed at different circumferential positions of a periphery of the inspection passage respectively to form at least two different views, and arranged so that a radiation beam produced by a radiation source of one of the inspection units is directed to a position beside the detector array of each of the remaining inspection units;
the control device is coupled to each of said radiation sources for adjusting a phase difference between the radiation beams of the radiation sources so that an effective detection area of each of the detector arrays is far away from an interference area at any moment, the effective detection area comprises a first position at which the detector array receives the largest backscatter radiation from the same inspection unit as well as an area adjacent to the first position, and the interference area comprises a second position at which the detector array receives the largest backscatter radiation from the remaining inspection units as well as an area adjacent to the second position;
the data processing device is coupled to each of the detector arrays to receive a detection signal from each of the detector modules and form an inspection image corresponding to each of the detector arrays at each moment according to the detection signal from each of the detector modules, wherein, when an inspection image corresponding to one of detector arrays at certain moment is formed, the data processing device is configured to calculate an effective detection area of the detector array at the moment, processes a detection signal from a detector module within the effective detection area and forms an inspection image of one side located at the detector array of the inspection target at the moment.

The second aspect of the present application provides a multi-view backscatter inspection method of the multi-view backscatter inspection system according to the first aspect of the present application to inspect the inspection target, the multi-view backscatter inspection method comprising:
adjusting a phase difference between the radiation beams of each of the radiation sources so that an effective detection area of each of the detector arrays is far away from an interference area at any moment;
forming an inspection image corresponding to each of the detector arrays at each moment according to the detection signal from each of the detector modules, wherein, when an inspection image corresponding to one of the detector arrays at certain moment is formed, calculating an effective detection area of the detector array at the moment, processing a detection signal from a detector module within the effective detection area and forming an inspection image of one side located at the detector array of the inspection target at the moment.

Based on the multi-view backscatter inspection system and the multi-view backscatter inspection method provided by the present application, the detector array comprises at least two detector modules arranged at different positions and independent of each other, so that the detector array has a position resolution capability. At least two inspection units are arranged so that a radiation beam produced by a radiation source of one of the inspection units is directed to a position beside the detector array of the remaining inspection units. It may prevent interference of a transmission radiation over detection signals from the remaining inspection units when the radiation source penetrates an inspection target. It may adjust a phase difference between radiation beams of the radiation sources, so that an effective detection area of each of the detector arrays at any moment in the inspection process is far away from the interference area. It may differentiate a detection signal from a detector module corresponding to an effective detection area and a detection signal from a detector module corresponding to the remaining areas, and effectively reduce mutual interference between scatter radiations (including backscatter radiation and forward scatter radiation) of each of the radiation sources. The data processing device which calculates an effective detection area and processes a detection signal from a detector module within an effective detection area to form an inspection image of one side located at the inspection unit of the inspection target at a corresponding moment, may favorably suppress the influence of an interference signal, and finally obtain a fine quality of the inspection image. As the interference of both the transmission radiation and the scatter radiation may be effectively reduced, a plurality of views in the present application may perform beam emission at the same time, and improve an average dose rate of an output radiation of each view, so that the image quality of the inspection target may be improved.

Other features of the present application and advantages thereof will become explicit by means of the following detailed descriptions of exemplary embodiments of the present application with reference to the drawings.

### BRIEF DESCRIPTION OF THE ACCOMPANYING DRAWINGS

The drawings described herein are used to provide a further understanding of the present application and constitute a part of the present application. The illustrative embodiments of the present application as well as the descriptions thereof, which are used for explaining the present application, do not constitute improper definitions on the present application. In the drawings:
Figure 1 is a schematic view of the structure of the multi-view radiation inspection system having a plurality of penetrating radiation sources in the prior art.
Figure 2 is a schematic view of the structure of the multi-view backscatter inspection system in the embodiments of the present application;
Figure 3 is a schematic view of the top view structure of Figure 2.
Figure 4 is a schematic view of the principles of separating an effective detection area and an interference area of the detector array in the embodiment shown in Figure 2.

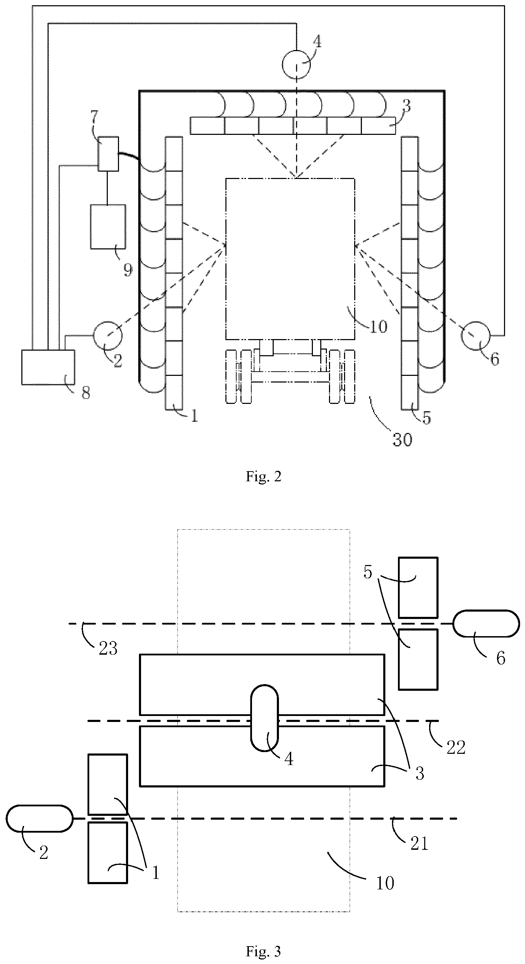

In Figure 2 to Figure 4, various reference signs represent: 1, 3, 5 detector array; 2, 4, 6 radiation source; 7 multi-passage data acquisition board; 8 control device; 9 data processing computer; 21 left view beam surface; 22 top view beam scanning surface; 23 right view beam scanning surface; 30 check passage.

### DETAILED DESCRIPTION OF THE PREFERRED EMBODIMENTS

Next, the technical solution in the embodiments of the present application will be explicitly and completely described in combination with the drawings in the embodiments of the present application. Apparently, the described embodiments are merely part of the embodiments of the present application, rather than all the embodiments. The following descriptions of at least one exemplary embodiment which are in fact merely descriptive, by no means serve as any delimitation on the present application as well as its application or use. On the basis of the embodiments of the present application, all the other embodiments acquired by a person skilled in the art on the premise that no inventive effort is involved fall into the protection scope of the present application.

Unless additionally specified, the relative arrangements, numerical expressions and numerical values of the components and steps expounded in these examples do not limit the scope of the present application. At the same time, it should be understood that, in order to facilitate the description, the dimensions of various parts shown in the drawings are not delineated according to actual proportional relations. The techniques, methods, and apparatuses known to a common technical person in the relevant art may not be discussed in detail, but where appropriate, techniques, methods, and apparatuses should be considered as part of the granted description. Among all the examples shown and discussed here, any specific value should be construed as being merely illustrative, rather than as a delimitation. Thus, other examples of exemplary embodiments may have different values. It should be noted that similar reference signs and letters present similar items in the following drawings, and therefore, once an item is defined in a drawing, there is no need for further discussion in the subsequent drawings.

In the description of the present application, it is necessary to understand that, such wordings as "first" and "second" which are used to define the parts, are only intended to facilitate distinguishing the corresponding parts. Unless otherwise specified, the aforementioned wordings do not have particular meanings, and thus cannot be understood as limiting the protection scope of the present application.

In the description of the present application, it is necessary to understand that, the azimuth or positional relations indicated by such azimuth terms as "front, rear, up, down, left, right", "transverse, vertical, perpendicular, horizontal" and "top, bottom", which are usually based on the azimuth or positional relations illustrated by the drawings, are only for facilitating description of the present application and simplifying the description. Unless otherwise specified, such azimuth terms do not indicate or imply that the device or element referred to has to present a particular azimuth or to be constructed and operated in a particular azimuth, so that it cannot be understood as limiting the protection scope of the present application. The azimuth terms "within" and "outside" mean the interior and exterior relative to the contour of various members themselves.

As shown in Figures 2-4, the present application provides a multi-view backscatter inspection system. The multi-view backscatter inspection system comprises an inspection passage 30, at least two inspection units, a control device 8 and a data processing device.

The inspection unit comprises a radiation source and a detector array. The radiation source is used for emitting a rotating pencil radiation beam. The detector array is used for receiving a backscatter radiation from the inspection target irradiated by the radiation beam from the radiation source.

The detector array comprises at least two detector modules arranged at different positions and independent of each other, and it is provided so that the detector array has a position resolution capability. The amount of detector modules in each detector array may be the same, and may also be different. The greater the amount of detector modules in the detector array, the stronger the position resolution capability of the detector array will be.

As shown in Figure 2, the at least two inspection units are disposed at different circumferential positions of a periphery of the inspection passage 30 to form at least two different views. As shown in Figure 3, a radiation beam produced by a radiation source of one of the inspection units is directed to a position beside the detector array of the remaining inspection units. It is provided so that a radiation beam produced by a radiation source of any of the inspection unit cannot be directed to the detector array of the remaining inspection units, so that it is possible to prevent interference of a transmission radiation over the remaining inspection units when the radiation source penetrates through the inspection target. For example, it is possible to allow that the at least two inspection units are arranged in staggered manner in an extending direction of the inspection passage 30 such that beam scanning surfaces of the radiation sources are spacedly disposed substantially in parallel to each other, to effectuate that a radiation beam produced by a radiation source of any of the inspection unit is directed to the position beside the detector array of the remaining inspection units.

The control device 8 is coupled to the radiation source of each of the inspection units. The control device 8 adjusts a phase difference between the radiation beams of the radiation sources so that an effective detection area of each of the detector arrays is far away from an interference area at any moment.

The effective detection area comprises a first position at which the detector array receives the largest backscatter radiation from the same inspection unit as well as an area adjacent to the first position. The interference area comprises a second position at which the detector array receives the largest backscatter radiation from the remaining inspection units as well as an area adjacent to the second position.

The effective detection area changes constantly as a position of the radiation beam changes. The interference area also changes constantly as a position of the radiation beam changes. Among them, the control device 8 may adjust a scanning period, an initial phase and/or a rotation direction of the radiation beam from each of the radiation sources to adjust the phase difference between the radiation beams.

The effective detection area may be directly determined according to a peak value and a peak position from the detector array; and may also be determined according to a position of the radiation beam.

For example, when the effective detection area is directly determined according to a peak value and a peak position from the detector array, the position at which the peak value signal is situated as well as the area adjacent to the peak value signal position and with an output signal reaching certain percentage and above of peak value signal (corresponding to an area adjacent to the first position) may serve as an effective detection area. The percentage may be between 20% and 70%, for example, may be 20%, 25%, 35%, 50%, 60%, 65%, etc.

When the radiation beam dose is relatively low, there is a notable error in the peak position and the peak value. In this case, it is more accurate to estimate the effective detection area by utilizing the position of the radiation beam. The scatter photon distribution of the radiation beam at different positions are calculated by simulation by means of a computer in advance, the scatter signal distribution on the detector array is calculated according to distribution of scatter photons, and a theoretical effective detection area is determined according to a peak value and a peak position, so as to obtain a theoretical relation between a radiation beam position and an effective detection area. When an effective detection area is determined according to a radiation beam position, the effective detection area is determined according to a theoretical relation between a radiation beam position and an effective detection area.

An effective detection area of each of the detector arrays at any moment in the inspection process is far away from the interference area. It may differentiate a detection signal from a detector module corresponding to an effective detection area and a detection signal from a detector module corresponding to the remaining areas, and effectively reduce mutual interference between scatter radiations of the radiation sources.

The data processing device is coupled to each of the detector arrays to receive a detection signal from each of the detector modules and form an inspection image corresponding to each of the detector arrays at each moment according to the detection signal from each of the detector modules. When an inspection image corresponding to certain detector array at certain moment is formed, the data processing device calculates an effective detection area of the detector array at the moment, processes a detection signal from a detector module within the effective detection area and forms an inspection image of one side at the detector array of the inspection target 10 at the moment.

The detection signal from the detector module corresponding to the effective detection area is processed to obtain a fine quality of the inspection image, and effectively reduce the influence of the interference signal over the inspection image.

According to the aforementioned descriptions, it can be known that, as the interference of both the transmission radiation and the scatter radiation may be effectively reduced, a plurality of views in the present application may perform beam emission at the same time, and improve an average dose rate of an output radiation of each view, so that the image quality of the inspection target may be improved.

In a preferred embodiment, the data processing device comprises a data acquisition device and a data processing computer 9. The data acquisition device is respectively coupled to the detector array of each of the inspection units and the data processing computer 9, to receive a detection signal from each of the detector modules and transmitting the detection signal to the data processing computer 9. The data acquisition device preferably includes a multi-passage data acquisition board 7. The data processing computer 9 forms inspection images corresponding to each of the detector arrays at each moment according to a detection signal from each of the detector modules.

In a preferred embodiment, the multi-view backscatter inspection system further comprises a radiation beam position detection device. The radiation beam position detection device is coupled to the data processing device. The radiation beam position detection device detects a position signal of a radiation beam from a radiation source of each of the inspection units and transmits the position signal to the data processing device. The data processing device calculates an effective detection area of the detector array of each of the inspection units according to the position signal.

The radiation beam position detection device may include two or more sensors in one-to-one correspondence with the radiation sources of two or more inspection units. Each sensor detects a position signal of a radiation beam from a corresponding radiation source. The sensor is, for example, an angle sensor that measures a rotation angle of a rotation device of the radiation source.

The radiation beam position detection device may be directly connected to the data processing device, and may also be connected to the data processing device through the control device 8.

In a preferred embodiment, the control device 8 adjusts same scanning cycle and/or rotation direction (for example the rotation directions of the radiation beams of the radiation sources are all in a clockwise direction or a counterclockwise direction), yet different initial phases of the radiation beams of the radiation sources of the inspection units. It is provided so that the adjusting process is simpler.

In several preferred embodiments, the multi-view backscatter inspection system may comprise two inspection units.

For example, the multi-view backscatter inspection system may include a first inspection unit and a second inspection unit respectively provided at two opposite sides of the inspection passage 30. A first end of the first inspection unit and a first end of the second inspection unit form a common first end and a second end of the first inspection unit and a second end of the second inspection unit form a common second end. The control device 8 causes the scanning of the radiation beam from the radiation source of the first inspection unit from the first end of the first inspection unit to the second end of the first inspection unit, and simultaneously causes the scanning of the radiation beam from the radiation source of the second inspection unit from the second end of the second inspection unit to the first end of the second inspection unit. For example, both the first inspection unit and the second inspection unit are disposed in a longitudinal direction. In the case that the lower end is the common first end, the upper end is the common second end. It is provided so that the effective detection area of each of the detector arrays is separated from the interference area of corresponding the detector array, and the first inspection unit and the second inspection unit opposite to each other do not interfere with each other.

For another example, the multi-view backscatter inspection system may also comprise a first inspection unit and a second inspection unit adjacently provided in a circumferential direction of the inspection passage 30, and the control device 8 causes the scanning of the radiation beam from the radiation source of the first inspection unit starting from one end of the first inspection unit far away from the second inspection unit to another end of the first inspection unit proximate to the second inspection unit, and simultaneously causes the scanning of the radiation beam from the radiation source of the second inspection unit starting from one end of the second inspection unit proximate to the first inspection unit to another end of the second inspection unit far away from the first inspection unit. At this time, the effective detection area of each of the detector arrays is separated from the interference area of corresponding the detector array.

In preferred embodiments, the multi-view backscatter inspection system may include three or more inspection units.

For example, on the basis of the aforementioned multi-view backscatter inspection system having a first inspection unit and a second inspection unit opposite to each other, the multi-view backscatter inspection system further comprises a third inspection unit adjacent to the first inspection unit and the second inspection unit, the third inspection unit is disposed at the common second end, and the control device 8 simultaneously causes the scanning of the radiation beam from the radiation source of the third inspection unit from one end of the third inspection unit proximate to the first inspection unit to another end of the third inspection unit proximate to the second inspection unit. At this time, the effective detection area of each of the detector arrays in the three inspection units is separated from the interference area of corresponding the detector array.

It is also possible to provide four or more inspection units, and adjust a phase difference between the radiation beams of the radiation sources so that the effective detection area of each of the detector arrays is separated from the interference area, to realize the object of the present application.

The embodiments of the present application further provide a multi-view backscatter inspection method. The multi-view backscatter inspection method inspects the inspection target 10 using the aforementioned multi-view backscatter inspection system. The multi-view backscatter inspection method comprises:
adjusting a phase difference between the radiation beams of the radiation sources so that an effective detection area of each of the detector arrays is far away from an interference area at any moment;
forming an inspection image corresponding to each of the detector arrays at each moment according to the detection signal from each of the detector modules, wherein, when an inspection image corresponding to one detector array at certain moment is formed, the data processing device calculates an effective detection area of the detector array at the moment, processes a detection signal from a detector module within the effective detection area and forms an inspection image of one side located at the detector array of the inspection target 10 at the moment.

In a preferred embodiment, the multi-view backscatter inspection method further comprises: detecting a position signal of a radiation beam from a radiation source of each of the inspection units, and calculating an effective detection area of the detector array of each of the inspection units according to the position signal.

It is possible to adjust a scanning period, an initial phase and/or a rotation direction of the radiation beam from each of the radiation sources to adjust the phase difference between the radiation beams. In a preferred embodiment, the multi-view backscatter inspection method comprises adjusting the same scanning cycle and/or rotation direction, yet different initial phases of the radiation beams of the detectors of each of the inspection units.

In the case that the at least two inspection units comprise a first inspection unit and a second inspection unit respectively provided at two opposite sides of the inspection passage 30, the first inspection unit and the second inspection unit forming a common first end and a common second end, the multi-view backscatter inspection method preferably comprises: causing the scanning of the radiation beam from the radiation source of the first inspection unit from the first end of the first inspection unit to the second end of the first inspection unit, and at the same time causing the scanning of the radiation beam from the radiation source of the second inspection unit from the second end of the second inspection unit to the first end of the second inspection unit.

In the case that the multi-view backscatter inspection system further comprises a third inspection unit respectively adjacent to the first inspection unit and the second inspection unit, the third inspection unit is disposed at the second end, the multi-view backscatter inspection method preferably further comprises: simultaneously causing the scanning of the radiation beam from the radiation source of the third inspection unit from one end of the third inspection unit proximate to the first inspection unit to another end of the third inspection unit proximate to the second inspection unit.

In the case that a first inspection unit and a second inspection unit are adjacently provided in a circumferential direction of the inspection passage 30, the multi-view backscatter inspection method preferably comprises: causing the scanning of the radiation beam from the radiation source of the first inspection unit starting from one end of the first inspection unit far away from the second inspection unit to another end of the first inspection unit proximate to the second inspection unit, and at the same time causing the scanning of the radiation beam from the radiation source of the second inspection unit starting from one end of the second inspection unit proximate to the first inspection unit to another end of the second inspection unit far away from the first inspection unit.

The multi-view backscatter inspection method has the same advantages as the aforementioned multi-view backscatter inspection system.

Hereinafter, a specific embodiment of the present application will be described in combination with Figures 2 to 4.

As shown in Figure 2, the multi-view backscatter inspection system of the embodiment is a three-view backscatter inspection system. The three-view backscatter inspection system has three inspection units in total, respectively a left inspection unit, a top inspection unit and a right inspection unit. Each inspection unit forms an inspection view. The three-view backscatter inspection system further comprises a control device 8, a radiation beam position detection device, and a data processing device.

Refer to Figure 2. The left inspection unit which is located on a left side of the inspection passage 30 to form a left inspection face, includes a radiation source 2 and a detector array 1. The top inspection unit which is located at the top of the inspection passage 30 to form a top inspection face, includes a radiation source 4 and a detector array 3. The right inspection unit which is located on a right side of the inspection passage 30 to form a right inspection face, includes a radiation source 6 and a detector array 5.

The radiation source 2, the radiation source 4 and the radiation source 6 which are all X-ray sources for producing a rotary pencil beam, may produce X-ray beams in a pencil shape periodically changing in spatial position. There are multiple implementations of the X-ray sources. For example, the rotary X-ray sources in a pencil beam described in the Chinese Patent Application No. CN1947001A, and the American Patents US8861684B2 and US6434219B1 may serve as the radiation source of the present application.

As shown in Figure 2, the detector array 1, the detector array 3 and the detector array 5 respectively include at least two detector modules arranged at different positions and independent of each other. Each of the detector modules is independent of each other, so that each of the detector modules of the present embodiment has a resolution capability.

As shown in Figure 3, the radiation beam from the radiation source 2 scans to form a left-view beam scanning surface 21; the radiation beam from the radiation source 4 scans to form a top-view beam scanning surface 22; the radiation beam from the radiation source 6 scans to form a right-view beam scanning surface 23. The left view beam scanning surface 21, the top view beam scanning surface 22, and the right view beam scanning surface 23 are not coplanar with each other and are spaced apart from each other by certain distance substantially in parallel to each other. The spaced distance allows that the beam produced by the radiation source 2 cannot be directed to the detector array 3 and the detector array 5, the beam produced by the radiation source 4 cannot be directed to the detector array 1 and the detector array 5, and the beam produced by the radiation source 6 cannot be directed to the detector array 1 and the detector array 3. Thus, the three-view backscatter inspection system of the present embodiment effectuates that a radiation beam produced by the radiation source of any of the inspection units is directed to the outside of the detector array of the remaining inspection units. Certainly, as long as the radiation beam from each of the radiation sources cannot be directed to the detector array not of the same inspection unit by reasonable arrangement, the interference of the transmission light of any of the radiation sources over other inspection units may be eliminated.

In the present embodiment, the data processing device comprises a data acquisition device and a data processing computer 9. The data acquisition device includes a multi-passage data acquisition board 7. The multi-passage data acquisition board 7 is respectively coupled to the control device 8 and the data processing computer 9. The amount of the multi-passage data acquisition board 7 may be one or more, depending on the amount of passages of the multi-passage data acquisition board 7 and the amount of the detector modules. When it is necessary to transmit a position signal of the radiation beam position detection device to the data processing computer 9 through the multi-passage data acquisition board 7 or it necessary to transfer other signals, there is also a need to consider the amount of a position signal required to be transferred or other signals.

As shown in Figure 2, each detector module of the detector arrays of each inspection unit is respectively accessed to a plurality of passages of the multi-passage data acquisition board 7 so that the multi-passage data acquisition board 7 can acquire the detection signals from each detector module and transfer the detection signals to the data processing computer 9.

The control device 8 which is respectively coupled to the radiation source 2, the radiation source 4 and the radiation source 6, may send a control signal to each of the radiation sources. In the present embodiment, the scanning cycles and rotation directions of the radiation beams of the radiation sources are the same, while the initial phases of the radiation beams of the radiation sources adjusted by the control device 8 are different. Among them, the rotation directions of each of the radiation sources are in a counterclockwise rotation.

In the present embodiment, the radiation beam position detection device includes sensors respectively provided on the radiation source 2, the radiation source 4 and the radiation source 6 and coupled to the data processing device. The radiation beam position detection device acquires a position signal of the radiation beam from the corresponding radiation source.

As shown in Figure 2, in the present embodiment, the sensor first sends a position signal to the control device 8 which then sends each position signal to the data processing computer 9 through the multi-passage data acquisition board 7. Accordingly, the multi-passage data acquisition board 7 simultaneously acquires the detection signals from each of the detector modules and the position signals of the radiation beam from each of the radiation sources detected by each of the sensors, and sends each of the detection signals and each of the position signals to the data processing computer 9. The data processing computer 9 calculates an effective detection area of each detector array at the moment according to a position signal of the radiation at each moment, and forms an inspection image corresponding to the inspection target 10 according to a detection signal from each detector module within the effective detection area, so as to reduce the interference of scatter radiation from other inspection units.

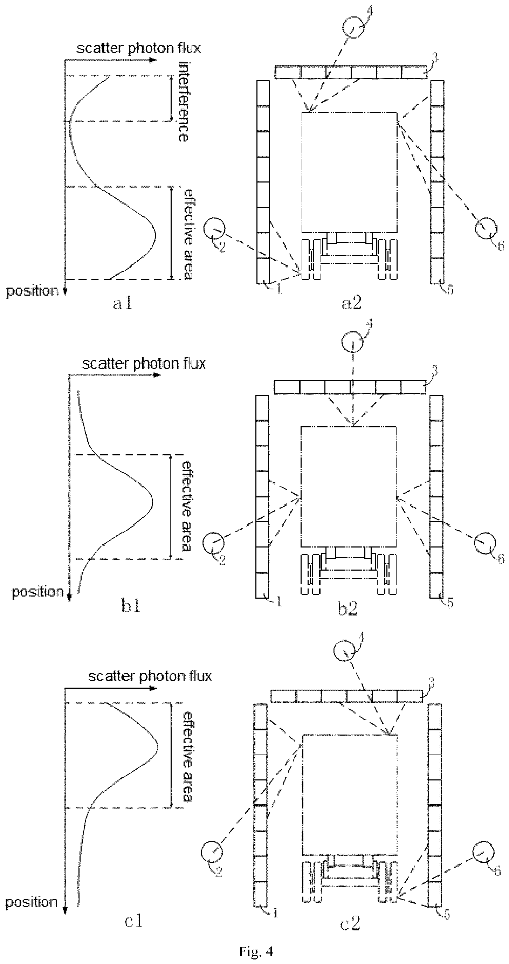

The inspection method and operation principles of the multi-view backscatter inspection system of the embodiment will be described below in combination with Figure 4.

The mutual interference between multiple view of the multi-view backscatter inspection system is mainly divided into two aspects: the first is the interference of the transmission radiation over the opposite detector array after the radiation beam passes through the inspection target 10, for example the interference of the radiation source 2 over the detector array 5; the second is the interference of the radiation beam (including backscatter radiation and forward scatter radiation) produced by scattering the radiation beam via the inspection target 10 over the detector arrays of the remaining inspection units, for example the interference of the radiation source 2 over the detector array 3.

As the transmission radiation has a favorable orientation, the present embodiment may effectively eliminate mutual interference produced by the transmission radiation by spacing the beam scanning surfaces of the radiation sources by certain distance.

In the present embodiment, the interference produced by the scatter radiation may separate an effective detection area and an interference area of each detector array at any moment by adjusting a phase difference between the radiation beams of the radiation sources of the inspection units, and form an inspection image of the detection target according to a detection signal from the detection module within an effective detection area of the detector array, so as to effectively reduce the interference produced by the scatter radiation.

As shown in Figure 4, in the present embodiment, the radiation beams produced by the radiation source 2, the radiation source 4 and the radiation source 6 are all in counterclockwise rotation. The control device 8 causes the same scanning cycle of the radiation beams of the three radiation sources.

In the present embodiment, in a rotation cycle of each of the radiation sources, the radiation beam from each radiation source may sweep the surface of the inspection target 10 three times. The control device 8 accurately adjusts the initial phase of the radiation beams of each of the radiation sources.

As shown in the picture a2 of Figure 4, the radiation beam from the radiation source 2 when initialized is projected to the left lowermost of the inspection target 10, the radiation beam from the radiation source 4 when initialized is projected to the left uppermost of the inspection target 10, and the radiation beam from the radiation source 6 when initialized is projected to the right uppermost of the inspection target 10. Since each radiation source is in counterclockwise rotation, the position of the radiation beam from each radiation source is shown in the picture b2 of Figure 4 after a 1/6 rotation cycle, and the position of the radiation beam from each radiation source is shown in the picture c2 of Figure 4 after a further 1/6 rotation cycle.

The position at which the radiation beam is projected on the inspection target 10 is called as a detection point. The detection points produced from the radiation source 2 that are scattered to different positions of the detector array 1 have different photon fluxes. Each moment of the scanning of the radiation source beam from the radiation source 2, a distribution curve may be formed according to different positions on the detector array as well as the corresponding photon fluxes. The picture a1 (corresponding to the picture a2), the picture b1 (corresponding to the picture b2) and the picture c1 (corresponding to the picture c2) of Figure 4 show a distribution curve of the scatter photon fluxes of the detector array 1 corresponding to different moments. As there is a maximum photon flux at the closest distance from the detection point and a smaller photon flux at a farther distance, an effective detection area of a detector array may be provided according to a position of the detection point. It may be considers that only a photon within an effective detection area is a photon scattered from a detection point of the radiation source 2.

In the present embodiment, the backscatter radiation of the detection point of the radiation source 4 may be projected into the detector array to form an interference area. Particularly when the detection point is at the leftmost of the inspection target 10, a notable interference area may be formed at an upper portion of the detector array 1, as shown in the picture a1 of Figure 4. However, in a scanning state of the radiation beam from each of the radiation sources as shown in Figure 4, it is possible to ensure that an interference area of the detector array 1 due to the radiation source 4 is separated from an effective detection area of the detector array 1, and at the same time, an interference area of the detector array 5 due to the radiation source 4 is also separated from the effective detection area of the detector array 5. The interference of the scatter radiation of other inspection units may be effectively reduced by forming an inspection image using a detection signal from a detector module corresponding to an effective detection area.

According to the above descriptions, it can be known that, the beam scanning surfaces of various views in the embodiments of the present application are away from each other by certain distance, and a phase different between the radiation beams from the radiation sources is adjusted, and the detection signals of an effective detection area and the remaining detection areas are differentiated, so that the radiation sources of the views even when performing simultaneous beam emission, may also effectively reduce the mutual interference between multiple views. Accordingly, each of the views is capable of performing beam emission at the same time, and improving an average dose rate of an output radiation of each view, so that the image quality may be improved.

## Claims

1. A multi-view backscatter inspection system, comprising:
an inspection passage (30);
at least two inspection units, each comprising:
a radiation source for producing a rotating pencil radiation beam,
a detector array for receiving backscatter radiation from a detection target (10) irradiated by the radiation beam, the detector array comprising at least two detector modules arranged at different positions and independent of each other, and
wherein the at least two inspection units are disposed at different circumferential positions of a periphery of the inspection passage (30) respectively to form at least two different views,
**characterized in that**:
the at least two inspection units are arranged so that a radiation beam produced by a radiation source of one of the inspection units is directed to a position beside the detector array of each of the remaining inspection units; and
the multi-view backscatter inspection system further comprising:
a control device (8) coupled to each of said radiation sources, for adjusting a phase difference between the radiation beams of the radiation sources, so that an effective detection area of each of the detector arrays is far away from an interference area at any moment, wherein the effective detection area comprising a first position at which the detector array receives the largest backscatter radiation from the same inspection unit as well as an area adjacent to the first position, and the interference area comprising a second position at which the detector array receives the largest backscatter radiation from the remaining inspection units as well as an area adjacent to the second position; and
a data processing device coupled to each of the detector arrays, for receiving a detection signal from each of the detector modules and forming an inspection image corresponding to each of the detector arrays at each moment according to the detection signal from each of the detector modules, wherein when an inspection image corresponding to one of the detector arrays at certain moment is formed, the data processing device is configured to calculate an effective detection area of the detector array at the moment, process a detection signal from a detector module within the effective detection area to form an inspection image of one side located at the detector array of the inspection target (10) at the moment.

2. The multi-view backscatter inspection system according to claim 1, wherein the data processing device comprises a data acquisition device and a data processing computer (9), in which the data acquisition device is coupled to each of the detector arrays and the data processing computer (9) to receive a detection signal from each of the detector modules and transmitting the detection signal to the data processing computer (9), such that the data processing computer (9) forms inspection images corresponding to each of the detector arrays at each moment.

3. The multi-view backscatter inspection system according to claim 1, further comprising a radiation beam position detection device coupled to the data processing device, for detecting a position signal of a radiation beam from each of the radiation sources and transmitting the position signal to the data processing device which calculates an effective detection area of each of the detector arrays according to the position signal.

4. The multi-view backscatter inspection system according to claim 1, wherein the data processing device is configured to determine an effective detection area of the detector array according to a peak value and a peak position from the detector array.

5. The multi-view backscatter inspection system according to claim 1, wherein the control device (8) is configured to adjust a scanning period, an initial phase and/or a rotation direction of the radiation beam from each of the radiation sources so as to adjust the phase difference.

6. The multi-view backscatter inspection system according to claim 5, wherein the radiation beam from each of the radiation sources has the same scanning period and/or the same rotation direction, but has a different initial phase.

7. The multi-view backscatter inspection system according to claim 1, wherein the at least two inspection units are arranged in a staggered manner in an extending direction of the inspection passage (30), such that beam scanning surfaces of each of the radiation sources are spacedly disposed substantially in parallel to each other.

8. The multi-view backscatter inspection system according to any one of claims 1 to 7, wherein the at least two inspection units comprise a first inspection unit and a second inspection unit provided at two opposite sides of the inspection passage (30) respectively, a first end of the first inspection unit and a first end of the second inspection unit locating at a common first end, and a second end of the first inspection unit and a second end of the second inspection unit locating at a common second end, the control device (8) for causing the scanning of the radiation beam from the radiation source of the first inspection unit from the first end of the first inspection unit to the second end of the first inspection unit, and simultaneously causing the scanning of the radiation beam from the radiation source of the second inspection unit from the second end of the second inspection unit to the first end of the second inspection unit.

9. The multi-view backscatter inspection system according to claim 8, wherein the at least two inspection units further comprise a third inspection unit adjacent to the first inspection unit and the second inspection unit, the third inspection unit is disposed at the common second end, and the control device (8) is configured to simultaneously cause the scanning of the radiation beam from the radiation source of the third inspection unit from one end of the third inspection unit proximate to the first inspection unit to another end of the third inspection unit proximate to the second inspection unit.

10. The multi-view backscatter inspection system according to any one of claims 1 to 7, wherein the at least two inspection units comprise a first inspection unit and a second inspection unit adjacently provided in a circumferential direction of the inspection passage (30), and the control device (8) is configured to cause the scanning of the radiation source of the first inspection unit from one end of the first inspection unit far away from the second inspection unit to another end of the first inspection unit proximate to the second inspection unit, and simultaneously cause the scanning of the radiation source of the second inspection unit from one end of the second inspection unit proximate to the first inspection unit to another end far away from the first inspection unit of the second inspection unit.

11. A multi-view backscatter inspection method using a multi-view backscatter inspection system according to any one of claims 1 to 10, comprising:
adjusting a phase difference between the radiation beams of the radiation sources so that an effective detection area of each of the detector arrays is far away from an interference area at any moment;
forming an inspection image corresponding to each of the detector arrays at each moment according to the detection signal from each of the detector modules, wherein when an inspection image corresponding to one of the detector arrays at certain moment is formed, calculating an effective detection area of the detector array at the moment, processing a detection signal from a detector module within the effective detection area to form an inspection image of one side located at the detector array of the inspection target (10) at the moment.

12. The multi-view backscatter inspection method according to claim 11, comprising:
detecting a position signal of the radiation beam from the radiation source of each of the inspection units, and
calculating an effective detection area of each of the detector arrays according to the position signal.

13. The multi-view backscatter inspection method according to claim 11, comprising: determining an effective detection area of the detector array according to a peak value and a peak position from the detector array.

14. The multi-view backscatter inspection method according to claim 11, comprising: adjusting a scanning period, an initial phase and/or a rotation direction of the radiation beam from each of the radiation sources so as to adjust the phase difference.

15. The multi-view backscatter inspection method according to claim 14, comprising: adjusting the radiation beam from each of the radiation sources to have the same scanning period and/or the same rotation direction, but have a different initial phase.

## Patentansprüche

1. Rückstreuinspektionssystem mit mehreren Ansichten, das Folgendes umfasst:
einen Inspektionskanal (30);
mindestens zwei Inspektionseinheiten, die jeweils Folgendes umfassen:
eine Strahlungsquelle zum Erzeugen eines rotierenden Nadelstrahlenbündels,
eine Detektoranordnung zum Empfangen von Rückstreustrahlung von einem Detektionsziel (10), das von dem Strahlenbündel bestrahlt wird, wobei die Detektoranordnung mindestens zwei Detektormodule umfasst, die an unterschiedlichen Positionen und unabhängig voneinander angeordnet sind, und
wobei die mindestens zwei Inspektionseinheiten jeweils an unterschiedlichen Umfangspositionen eines Rands des Inspektionskanals (30) angeordnet sind, um mindestens zwei verschiedene Ansichten zu bilden, **dadurch gekennzeichnet, dass**:
die mindestens zwei Inspektionseinheiten derart angeordnet sind, dass ein Strahlenbündel, das von einer Strahlungsquelle einer der Inspektionseinheiten erzeugt wird, auf eine Position neben der Detektoranordnung jeder der verbleibenden Inspektionseinheiten gerichtet ist; und
das Rückstreuinspektionssystem mit mehreren Ansichten ferner Folgendes umfasst:
eine Steuervorrichtung (8), die an jede der Strahlungsquellen gekoppelt ist, zum Einstellen einer Phasendifferenz zwischen den Strahlenbündeln der Strahlungsquellen, so dass sich ein effektiver Detektionsbereich jeder der Detektoranordnungen jederzeit von einem Interferenzbereich weit entfernt befindet, wobei der effektive Detektionsbereich eine erste Position, an der die Detektoranordnung die meiste Rückstreustrahlung von derselben Inspektionseinheit empfängt, sowie einen Bereich neben der ersten Position aufweist und der Interferenzbereich eine zweite Position, an der die Detektoranordnung die meiste Rückstreustrahlung von den verbleibenden Inspektionseinheiten empfängt, sowie einem Bereich neben der zweiten Position aufweist; und
eine Datenverarbeitungsvorrichtung, die an jede der Detektoranordnungen gekoppelt ist, zum Empfangen eines Detektionssignals von jedem der Detektormodule und zum Bilden eines Inspektionsbildes entsprechend jeder der Detektoranordnungen zu jeder Zeit entsprechend dem Detektionssignal von jedem der Detektormodule, wobei dann, wenn zu einer bestimmten Zeit ein Inspektionsbild entsprechend einer der Detektoranordnungen gebildet wird, die Datenverarbeitungsvorrichtung konfiguriert ist, einen effektiven Detektionsbereich der Detektoranordnung zu dieser Zeit zu berechnen und ein Detektionssignal von einem Detektormodul innerhalb des effektiven Detektionsbereichs zu verarbeiten, um ein Inspektionsbild einer Seite des Inspektionsziels (10), die sich zu dieser Zeit an der Detektoranordnung befindet, zu erzeugen.

2. Rückstreuinspektionssystem mit mehreren Ansichten nach Anspruch 1, wobei die Datenverarbeitungsvorrichtung eine Datenerfassungsvorrichtung und einen Datenverarbeitungscomputer (9) umfasst, in dem die Datenerfassungsvorrichtung an jede der Detektoranordnungen und den Datenverarbeitungscomputer (9) gekoppelt ist, um ein Detektionssignal von jedem der Detektormodule zu empfangen und um das Detektionssignal zu dem Datenverarbeitungscomputer (9) zu übertragen, so dass der Datenverarbeitungscomputer (9) jederzeit Inspektionsbilder entsprechend jeder der Detektoranordnungen bildet.

3. Rückstreuinspektionssystem mit mehreren Ansichten nach Anspruch 1, das ferner eine Vorrichtung zur Detektion einer Strahlenbündelposition umfasst, die an die Datenverarbeitungsvorrichtung gekoppelt ist, zum Detektieren eines Positionssignals eines Strahlenbündels von jeder der Strahlungsquellen und zum Übertragen des Positionssignals zu der Datenverarbeitungsvorrichtung, die einen effektiven Detektionsbereich jeder der Detektoranordnungen entsprechend dem Positionssignal berechnet.

4. Rückstreuinspektionssystem mit mehreren Ansichten nach Anspruch 1, wobei die Datenverarbeitungsvorrichtung konfiguriert ist, einen effektiven Detektionsbereich der Detektoranordnung entsprechend einem Spitzenwert und einer Spitzenposition von der Detektoranordnung zu bestimmen.

5. Rückstreuinspektionssystem mit mehreren Ansichten nach Anspruch 1, wobei die Steuervorrichtung (8) konfiguriert ist, eine Abtastperiode, eine Anfangsphase und/oder eine Drehrichtung des Strahlenbündels von jeder der Strahlungsquellen einzustellen, um so die Phasendifferenz einzustellen.

6. Rückstreuinspektionssystem mit mehreren Ansichten nach Anspruch 5, wobei das Strahlenbündel von jeder der Strahlungsquellen dieselbe Abtastperiode und/oder dieselbe Drehrichtung aufweist, aber eine andere Anfangsphase aufweist.

7. Rückstreuinspektionssystem mit mehreren Ansichten nach Anspruch 1, wobei die mindestens zwei Inspektionseinheiten in einer Erstreckungsrichtung des Inspektionskanals (30) gestaffelt angeordnet sind, so dass Strahlabtastflächen jeder der Strahlungsquellen im Wesentlichen zueinander parallel und voneinander beabstandet angeordnet sind.

8. Rückstreuinspektionssystem mit mehreren Ansichten nach einem der Ansprüche 1 bis 7, wobei die mindestens zwei Inspektionseinheiten eine erste Inspektionseinheit und eine zweite Inspektionseinheit umfassen, die jeweils an gegenüberliegenden Seiten des Inspektionskanals (30) vorgesehen sind, wobei sich ein erstes Ende der ersten Inspektionseinheit und ein erstes Ende der zweiten Inspektionseinheit an einem gemeinsamen ersten Ende befinden, und sich ein zweites Ende der ersten Inspektionseinheit und ein zweites Ende der zweiten Inspektionseinheit an einem gemeinsamen zweiten Ende befinden, und eine Steuervorrichtung (8) zum Veranlassen des Abtastens des Strahlenbündels von der Strahlungsquelle der ersten Inspektionseinheit von dem ersten Ende der ersten Inspektionseinheit zu dem zweiten Ende der ersten Inspektionseinheit und zum gleichzeitigen Veranlassen des Abtastens des Strahlenbündels von der Strahlenquelle der zweiten Inspektionseinheit von dem zweiten Ende der zweiten Inspektionseinheit zu dem ersten Ende der zweiten Inspektionseinheit umfassen.

9. Rückstreuinspektionssystem mit mehreren Ansichten nach Anspruch 8, wobei die mindestens zwei Inspektionseinheiten ferner eine dritte Inspektionseinheit neben der ersten Inspektionseinheit und der zweiten Inspektionseinheit umfassen, wobei die dritte Inspektionseinheit an dem gemeinsamen zweiten Ende angeordnet ist, und die Steuervorrichtung (8) konfiguriert ist, das Abtasten des Strahlenbündels von der Strahlungsquelle der dritten Inspektionseinheit von einem Ende der dritten Inspektionseinheit, das der ersten Inspektionseinheit am nächsten ist, zu einem anderen Ende der dritten Inspektionseinheit, das der zweiten Inspektionseinheit am nächsten ist, gleichzeitig zu veranlassen.

10. Rückstreuinspektionssystem mit mehreren Ansichten nach einem der Ansprüche 1 bis 7, wobei die mindestens zwei Inspektionseinheiten eine erste Inspektionseinheit und eine zweite Inspektionseinheit umfassen, die in einer Umfangsrichtung des Inspektionskanals (30) nebeneinander vorgesehen sind, und die Steuervorrichtung (8) konfiguriert ist, das Abtasten der Strahlungsquelle der ersten Inspektionseinheit von einem Ende der ersten Inspektionseinheit, das von der zweiten Inspektionseinheit weit entfernt ist, zu einem anderen Ende der ersten Inspektionseinheit, das der zweiten Inspektionseinheit am nächsten ist, zu veranlassen, und das Abtasten der Strahlungsquelle der zweiten Inspektionseinheit von einem Ende der zweiten Inspektionseinheit, das der ersten Inspektionseinheit am nächsten ist, zu einem anderen Ende der zweiten Inspektionseinheit, das von der ersten Inspektionseinheit weit entfernt ist, gleichzeitig zu veranlassen.

11. Rückstreuinspektionsverfahren mit mehreren Ansichten unter Verwendung eines Rückstreuinspektionssystems mit mehreren Ansichten nach einem der Ansprüche 1 bis 10, das Folgendes umfasst:
Einstellen einer Phasendifferenz zwischen den Strahlenbündeln der Strahlungsquellen, so dass ein effektiver Detektionsbereich jeder der Detektoranordnungen jederzeit von einem Interferenzbereich weit entfernt ist;
Bilden eines Inspektionsbildes entsprechend jeder der Detektoranordnungen zu jeder Zeit entsprechend dem Detektionssignal von jedem der Detektormodule, wobei dann, wenn zu einer bestimmten Zeit ein Inspektionsbild entsprechend einer der Detektoranordnungen gebildet wird, Berechnen eines effektiven Detektionsbereichs der Detektoranordnung zu der Zeit, Verarbeiten eines Detektionssignals von einem Detektormodul innerhalb des effektiven Detektionsbereichs, um ein Inspektionsbild einer Seite des Inspektionsziels (10), die sich zu der Zeit an der Detektoranordnung befindet, zu bilden.

12. Rückstreuinspektionsverfahren mit mehreren Ansichten nach Anspruch 11, das Folgendes umfasst:
Detektieren eines Positionssignals des Strahlenbündels von der Strahlungsquelle jeder der Inspektionseinheiten, und
Berechnen eines effektiven Detektionsbereichs jeder der Detektoranordnungen entsprechend dem Positionssignal.

13. Rückstreuinspektionsverfahren mit mehreren Ansichten nach Anspruch 11, das Folgendes umfasst: Bestimmen eines effektiven Detektionsbereichs der Detektoranordnung entsprechend einem Spitzenwert und einer Spitzenposition von der Detektoranordnung.

14. Rückstreuinspektionsverfahren mit mehreren Ansichten nach Anspruch 11, das Folgendes umfasst: Einstellen einer Abtastperiode, einer Anfangsphase und/oder einer Drehrichtung des Strahlenbündels von jeder der Strahlungsquellen, um die Phasendifferenz einzustellen.

15. Rückstreuinspektionsverfahren mit mehreren Ansichten nach Anspruch 14, das Folgendes umfasst: Einstellen des Strahlenbündels von jeder der Strahlungsquellen, so dass sie dieselbe Abtastperiode und/oder dieselbe Drehrichtung aufweisen, aber eine andere Anfangsphase aufweisen.

## Revendications

1. Système d'inspection à rétrodiffusion multi-vue, comprenant :
un passage d'inspection (30) ;
au moins deux unités d'inspection, chacune comprenant :
une source de radiation destinée à produire un faisceau de radiation rotatif en pinceau,
un réseau de détecteurs destiné à recevoir une radiation à rétrodiffusion depuis une cible de détection (10) irradiée par le faisceau de radiation, le réseau de détecteurs comprenant au moins deux modules de détecteurs agencés à des positions différentes et indépendants l'un de l'autre, et
lesdites au moins deux unités d'inspection étant disposées à des positions circonférentielles différentes d'une périphérie du passage d'inspection (30) respectivement pour former au moins deux vues différentes,
**caractérisé en ce que** :
lesdites au moins deux unités d'inspection sont agencées de sorte qu'un faisceau de radiation produit par une source de radiation d'une des unités d'inspection est dirigé jusqu'à une position à côté du réseau de détecteurs de chacune des unités d'inspection restantes ; et
le système d'inspection à rétrodiffusion multi-vue comprend en outre :
un dispositif de commande (8) couplé à chacune desdites sources de radiation, destiné à ajuster une différence de phase entre les faisceaux de radiation des sources de radiation, de sorte qu'une zone de détection effective de chacun des réseaux de détecteurs est en éloignement d'une zone d'interférence à tout moment, dans lequel la zone de détection effective comprend une première position à laquelle le réseau de détecteurs reçoit la plus grande radiation à rétrodiffusion depuis la même unité d'inspection ainsi qu'une zone adjacente à la première position, et la zone d'interférence comprend une seconde position à laquelle le réseau de détecteurs reçoit la plus grande radiation à rétrodiffusion depuis les unités d'inspection restantes ainsi qu'une zone adjacente à la seconde position ; et
un dispositif de traitement de données couplé à chacun des réseaux de détecteurs, destiné à recevoir un signal de détection provenant de chacun des modules de détecteurs et à former une image d'inspection correspondant à chacun des réseaux de détecteurs à chaque moment en accord avec le signal de détection provenant de chacun des modules de détecteurs, dans lequel, quand une image d'inspection correspondant à un des réseaux de détecteurs à un certain moment est formée, le dispositif de traitement de données est configuré pour calculer une zone de détection effective du réseau de détecteurs à ce moment, pour traiter un signal de détection provenant d'un module de détecteur à l'intérieur de la zone de détection effective afin de former une image d'inspection d'un côté situé au niveau du réseau de détecteurs de la cible d'inspection (10) à ce moment.

2. Système d'inspection à rétrodiffusion multi-vue selon la revendication 1, dans lequel le dispositif de traitement de données comprend un dispositif d'acquisition de données et un ordinateur de traitement de données (9), dans lequel le dispositif d'acquisition de données est couplé à chaque élément parmi les réseaux de détecteurs et l'ordinateur de traitement de données (9) pour recevoir un signal de détection provenant de chacun des modules de détecteurs et transmettre le signal de détection à l'ordinateur de traitement de données (9), de sorte que l'ordinateur de traitement de données (9) forme des images d'inspection correspondant à chacun des réseaux de détecteurs à chaque moment.

3. Système d'inspection à rétrodiffusion multi-vue selon la revendication 1, comprenant en outre un dispositif de détection de position de faisceau de radiation couplé au dispositif de traitement de données, destiné à détecter un signal de position d'un faisceau de radiation provenant de chacune des sources de radiation, et à transmettre le signal de position au dispositif de traitement de données qui calcule une zone de détection effective de chacun des réseaux de détecteurs en accord avec le signal de position.

4. Système d'inspection à rétrodiffusion multi-vue selon la revendication 1, dans lequel le dispositif de traitement de données est configuré pour déterminer une zone de détection effective du réseau de détecteurs en accord avec une valeur de pointe et une position de pointe à partir du réseau de détecteurs.

5. Système d'inspection à rétrodiffusion multi-vue selon la revendication 1, dans lequel le dispositif de commande (8) est configuré pour ajuster une période de balayage, une phase initiale et/ou une direction de rotation du faisceau de radiation provenant de chacune des sources de radiation de manière à ajuster la différence de phase.

6. Système d'inspection à rétrodiffusion multi-vue selon la revendication 5, dans lequel le faisceau de radiation provenant de chacune des sources de radiation a la même période de balayage et/ou la même direction de rotation, mais a une phase initiale différente.

7. Système d'inspection à rétrodiffusion multi-vue selon la revendication 1, dans lequel lesdites au moins deux unités d'inspection sont agencées d'une manière échelonnée dans une direction en prolongement du passage d'inspection (30) de sorte que des surfaces de balayage de faisceau de chacune des sources de radiation sont disposées de manière espacée sensiblement parallèlement les unes aux autres.

8. Système d'inspection à rétrodiffusion multi-vue selon l'une quelconque des revendications 1 à 7, dans lequel lesdites au moins deux unités d'inspection comprennent une première unité inspection et une deuxième unité d'inspection prévues au niveau de deux côtés opposés du passage d'inspection (30) respectivement, une première extrémité de la première unité d'inspection et une première extrémité de la deuxième unité d'inspection étant situées à une première extrémité commune, et une seconde extrémité de la première unité d'inspection et une seconde extrémité de la deuxième unité inspection étant situées à une seconde extrémité commune, le dispositif de commande (8) étant destiné à provoquer le balayage du faisceau de radiation provenant de la source de radiation de la première unité inspection depuis la première extrémité de la première unité inspection jusqu'à la seconde extrémité de la première unité inspection, et à provoquer simultanément le balayage du faisceau de radiation provenant de la source de radiation de la deuxième unité d'inspection depuis la seconde extrémité de la deuxième unité d'inspection jusqu'à la première extrémité de la deuxième unité d'inspection.

9. Système d'inspection à rétrodiffusion multi-vue selon la revendication 8, dans lequel lesdites au moins deux unités d'inspection comprennent en outre une troisième unité d'inspection adjacente à la première unité d'inspection et à la deuxième unité d'inspection, la troisième unité d'inspection est disposée au niveau de la seconde extrémité commune, et le dispositif de commande (8) est configuré pour provoquer simultanément le balayage du faisceau de radiation provenant de la source de radiation de la troisième unité d'inspection depuis une extrémité de la troisième unité d'inspection à proximité de la première unité d'inspection jusqu'à une autre extrémité de la troisième unité d'inspection à proximité de la deuxième unité d'inspection.

10. Système d'inspection à rétrodiffusion multi-vue selon l'une quelconque des revendications 1 à 7, dans lequel lesdites au moins deux unités d'inspection comprennent une première unité d'inspection et une deuxième unité d'inspection adjacente prévues dans une direction circonférentielle du passage d'inspection (30), et le dispositif de commande (8) est configuré pour provoquer le balayage de la source de radiation de la première unité d'inspection depuis une extrémité de la première unité d'inspection en éloignement de la deuxième unité d'inspection jusqu'à une autre extrémité de la première unité d'inspection à proximité de la deuxième unité d'inspection, et pour provoquer simultanément le balayage de la source de radiation de la deuxième unité d'inspection depuis une extrémité de la deuxième unité d'inspection à proximité de la première unité d'inspection jusqu'à une autre extrémité en éloignement de la première unité d'inspection de la deuxième unité d'inspection.

11. Procédé d'inspection à rétrodiffusion multi-vue utilisant un système d'inspection à rétrodiffusion multi-vue selon l'une quelconque des revendications 1 à 10, comprenant les étapes consistant à :
ajuster une différence de phase entre les faisceaux de radiation des sources de radiation de sorte qu'une zone de détection effective de chacun des réseaux de détecteurs est en éloignement d'une zone d'interférence à tout moment ;
former une image d'inspection correspondant à chacun des réseaux de détecteurs à chaque moment en accord avec le signal de détection provenant de chacun des modules de détecteurs, étape comprenant l'opération consistant à, quand une image d'inspection correspondant à un des réseaux de détecteurs à un certain moment est formée, calculer une zone de détection effective du réseau de détecteurs à ce moment, traiter un signal de détection provenant d'un module de détecteur à l'intérieur de la zone de détection effective afin de former une image d'inspection d'un côté situé au niveau du réseau de détecteurs de la cible d'inspection (10) à ce moment.

12. Procédé d'inspection à rétrodiffusion multi-vue selon la revendication 11, comprenant les étapes consistant à :
détecter un signal de position du faisceau de radiation provenant de la source de radiation de chacune des unités d'inspection, et
calculer une zone de détection effective de chacun des réseaux de détecteurs en accord avec le signal de position.

13. Procédé d'inspection à rétrodiffusion multi-vue selon la revendication 11, comprenant l'étape consistant à : déterminer une zone de détection effective du réseau de détecteurs en accord avec une valeur de pointe et une position de pointe à partir du réseau de détecteurs.

14. Procédé d'inspection à rétrodiffusion multi-vue selon la revendication 11, comprenant l'étape consistant à : ajuster une période de balayage, une phase initiale et/ou une direction de rotation du faisceau de radiation provenant de chacune des sources de radiation de manière à ajuster la différence de phase.

15. Procédé d'inspection à rétrodiffusion multi-vue selon la revendication 14, comprenant l'étape consistant à : ajuster le faisceau de radiation provenant de chacune des sources de radiation pour avoir la même période de balayage et/ou la même direction de rotation, mais pour avoir une phase initiale différente.
